# EUROPEAN PATENT APPLICATION

(11) **EP 4 435 374 A1**
(43) Date of publication of application: **25.09.2024**
(21) Application number: 24158480.4
(22) Date of filing: 19.02.2024
(51) Int. Cl.: G01B 5/30, G01B 7/16

(54) **METHODS, SYSTEMS, AND DEVICES FOR DETECTING DEFORMATION ON A SURFACE**

(30) Priority: 23.03.2023 CN 202310293438
(71) Applicant: Honeywell International Inc., Charlotte, NC 28202 (US)
(72) Inventor: YANG, Fan, Charlotte, 28202 (US); HU, Yu, Charlotte, 28202 (US); WANG, Houyong, Charlotte, 28202 (US); CHEN, Wu, Charlotte, 28202 (US); ZHANG, Tengfei, Charlotte, 28202 (US)
(74) Representative: Haseltine Lake Kempner LLP

(57) **Abstract**

Methods, apparatuses and systems for a sensing deformation in a surface are disclosed herein. An example device may include a first sensor configured to mechanically couple to a first point and a second point on a surface. The first point and the second point may be located across an opening of a groove on the surface. An electrical property of the first sensor may be configured to change in response to a variation in the distance between the first point and the second point.

## Description

### BACKGROUND

A deformation formed on a surface may lead to adverse consequences. For example, a deformation on a surface of bottom cover of an electric vehicle may damage the battery package and place the vehicle in a dangerous condition.

Applicant has identified many technical challenges and difficulties associated with detecting and sensing the presence of deformation on a surface. Through applied effort, ingenuity, and innovation, Applicant has solved problems related to detecting and sensing the presence of deformation on a surface by developing solutions embodied in the present disclosure, which are described in detail below.

### BRIEF SUMMARY

Various embodiments described herein relate to methods, apparatuses, and systems for sensing deformation. Various embodiments provide a sensing system. In various embodiments, the sensing system comprises a groove formed on a surface, the groove comprising an opening, wherein a distance between a first point and a second point on the surface and across the opening is configured to vary in response to a first deformation on the surface; a first sensor mechanically coupled to the first point and the second point, wherein an electrical property of the first sensor is configured to change in response to the variation in the distance between the first point and the second point; and a detection circuitry configured to: detect the change in the electrical property of the first sensor; and generate an output indicating a presence of the first deformation using the detection of the change in the electrical property of the first sensor.

In various embodiments, the sensing system comprises a second sensor coupled to a third point and a fourth point on the surface and across the opening, wherein a distance between the third point and the fourth point is configured to vary in response to a second deformation, and an electrical property of the second sensor is configured to change in response to the variation in the distance between the third point and the fourth point, wherein the detection circuitry is configured to: detect the change in the electrical property of the second sensor; and generate an output indicating a presence of the second deformation using the detection of the change in the electrical property of the second sensor; and a communications circuitry configured to generate an alarm using any of the output indicating the presence of the first deformation and the output indicating the presence of the second deformations.

In various embodiments, a line connecting the first point and the second point is distinct from and is approximately parallel to a line connecting the third point and the fourth point. In various embodiments, a line connecting the first point and the second point is distinct from and intersects a line connecting the third point and the fourth point.

In various embodiments, the surface is on a bottom cover of an electric vehicle facing a battery of the electric vehicle. In various embodiments, the battery comprises a battery cell structure, wherein the battery cell structure and the bottom cover form a chassis of the electric vehicle.

In various embodiments, the sensor comprises a resistive strain gauge wherein a resistance of the resistive strain gauge varies due to the variation in the distance between the first point and the second point and wherein the first deformation is detected when the resistance is outside a normal resistance range.

In various embodiments, the sensor comprises a capacitive strain gauge wherein a capacitance of the capacitive strain gauge varies due to the variation in the distance between the first point and the second point and wherein the first deformation is detected when the capacitance is outside a normal capacitance range.

In various embodiments, the sensor comprises an inductive strain gauge wherein an inductance of the inductive strain gauge varies due to the variation in the distance between the first point and the second point and wherein the first deformation is detected when the inductance is outside a normal inductance range.

In various embodiments, the sensor comprises a piezoelectric material, wherein the piezoelectric material generates a voltage due to the variation in the distance between the first point and the second point and wherein the first deformation is detected when the voltage is outside a normal voltage range.

In various embodiments, the sensor comprises a breakable conductive element, wherein the breakable conductive element generates an open circuit between the first point and the second point due to the variation in the distance between the first point and the second point and wherein the first deformation is detected using the open circuit.

In various embodiments, the sensor comprises a flexible substrate wherein a length of the flexible substrate is configured to change because of the variation in the distance between the first point and the second point, wherein the breakable conductive element is mechanically coupled to the flexible substrate.

In various embodiments, the breakable conductive element comprises nanocrystal metal.

Various embodiments of the present disclosure provide a method comprising measuring an electrical property of a first sensor, wherein the first sensor is mechanically coupled to a first point and a second point on a surface, wherein the first point and the second point are located across an opening of a groove on the surface; comparing the electrical property of the first sensor with a first threshold and with a second threshold; and determining a first deformation of the surface when the electrical property of the first sensor is higher than the first threshold or lower than the second threshold.

In various embodiments, the method comprises measuring an electrical property of a second sensor, wherein the second sensor is mechanically coupled to a third point and a fourth point on the surface, wherein the third point and the fourth point are located across the opening of the groove on the surface; comparing the electrical property of the second sensor with a third threshold and with a fourth threshold; determining a second deformation of the surface when the electrical property of the second sensor is higher than the third threshold or lower than the second threshold; and generating an alarm in response to determining any of the first deformation and the second deformations.

In various embodiments, a line connecting the first point and the second point is distinct from and is approximately parallel to a line connecting the third point and the fourth point. In various embodiments, a line connecting the first point and the second point is distinct from and intersects a line connecting the third point and the fourth point.

Various embodiments of the present disclosure provide a sensing device. In various embodiments, the sensing device comprises a first sensor configured to mechanically couple to a first point and a second point on a surface, wherein the first point and the second point are located across an opening of a groove on the surface, wherein an electrical property of the first sensor is configured to change in response to a variation in the distance between the first point and the second point; and a detection circuitry configured to: detect the change in the electrical property of the first sensor; and generate an output indicating a presence of a first deformation using the detection of the change in the electrical property of the first sensor.

In various embodiments, the sensing device comprises a second sensor configured to mechanically couple to a third point and a fourth point on a surface, wherein the third point and the fourth point are located across the opening of the groove on the surface, wherein an electrical property of the second sensor is configured to change in response to a variation in the distance between the third point and the fourth point; wherein the detection circuitry is configured to:

detect the change in the electrical property of the second sensor; and generate an output indicating a presence of a second deformation using the detection of the change in the electrical property of the second sensor; and a communications circuitry configured to generate an alarm using any of the output indicating the presence of the first deformation and the output indicating the presence of the second deformations.

In various embodiments, the a line connecting the first point and the second point is distinct from a line connecting the third point and the fourth point.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1A illustrates an example schematic diagram depicting a battery cell structure and cover in accordance with the prior art;
FIG. 1B illustrates an example schematic diagram depicting an electric vehicle having a battery cell structure and cover in accordance with the prior art;
FIG. 1C illustrates example damages to a surface as in accordance with the prior art;
FIG. 2A is a schematic diagram illustrating a sensing system in accordance with various embodiments of the present disclosure;
FIG. 2B is a schematic diagram illustrating a sensing system in accordance with various embodiments of the present disclosure;
FIG. 2C is a schematic diagram illustrating a sensing system in accordance with various embodiments of the present disclosure;
FIG. 3A is a schematic diagram illustrating a sensing system in accordance with various embodiments of the present disclosure;
FIG. 3B is a schematic diagram illustrating a sensing system in accordance with various embodiments of the present disclosure;
FIG. 3C is a schematic diagram illustrating a sensing system in accordance with various embodiments of the present disclosure;
FIG. 4A is a schematic diagram illustrating a resistive strain gauge in accordance with various embodiments of the present disclosure;
FIG. 4B is a schematic diagram illustrating a resistive strain gauge in accordance with various embodiments of the present disclosure;
FIG. 4C is a schematic diagram illustrating a resistive strain gauge in accordance with various embodiments of the present disclosure;
FIG. 5 is a schematic diagram illustrating a capacitive strain gauge in accordance with various embodiments of the present disclosure;
FIG. 6 is a schematic diagram illustrating an inductive strain gauge in accordance with various embodiments of the present disclosure;
FIG. 7 is a schematic diagram illustrating a piezo electric element in accordance with various embodiments of the present disclosure;
FIG. 8A is a schematic diagram illustrating various aspects of a sensing system in accordance with various embodiments of the present disclosure;
FIG. 8B is a schematic diagram illustrating a conductive element in accordance with various embodiments of the present disclosure;
FIG. 8C is a schematic diagram illustrating a conductive element in accordance with various embodiments of the present disclosure;
FIG. 9A is a schematic diagram illustrating various aspects of a sensing system in accordance with various embodiments of the present disclosure;
FIG. 9B is a schematic diagram illustrating various aspects of a sensing system in accordance with various embodiments of the present disclosure;
FIG. 9C is a schematic diagram illustrating various aspects of a sensing system in accordance with various embodiments of the present disclosure;
FIG. 10 is a schematic diagram illustrating a system in accordance with various embodiments of the present disclosure;
FIG. 11A is a schematic diagram illustrating various aspects of a sensing system in accordance with various embodiments of the present disclosure;
FIG. 11B is a schematic diagram illustrating various aspects of a sensing system in accordance with various embodiments of the present disclosure;
FIG. 11C is a schematic diagram illustrating various aspects of a sensing system installed on a bottom cover of a vehicle in accordance with various embodiments of the present disclosure;
FIG. 12 is a schematic diagram illustrating a controller in accordance with various embodiments of the present disclosure;
FIG. 13 is a flowchart illustrating a method in accordance with various embodiments of the present disclosure;
FIG. 14 is a flowchart illustrating a method in accordance with various embodiments of the present disclosure;
FIG. 15 is a flowchart illustrating a method in accordance with various embodiments of the present disclosure;
FIG. 16 is a flowchart illustrating a method in accordance with various embodiments of the present disclosure; and
FIG. 17 is a schematic diagram illustrating various aspects of a sensing device in accordance with various embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

The components illustrated in the figures represent components that may or may not be present in various embodiments of the present disclosure described herein such that embodiments may include fewer or more components than those shown in the figures while not departing from the scope of the present disclosure. Some components/aspects may be omitted from one or more figures or shown in dashed line for visibility, clarity, and/or illustrative purposes, for example for visibility of the underlying components.

The phrases "in an example embodiment," "some embodiments," "various embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such components or features may be optionally included in some embodiments, or may be excluded.

The terms "electronically coupled" or "in electronic communication with" in the present disclosure refer to two or more electrical components (for example, but not limited to, a controller, sensor, strain gauge, detection module, an example processing circuitry, communication module, input/output module, memory) and/or electric circuit(s) being connected through wired means (for example but not limited to, conductive wires or traces) and/or wireless means (for example but not limited to, wireless network, electromagnetic field), such that data and/or information (for example, electronic indications, signals) may be transmitted to and/or received from the electrical components and/or electric circuit(s) that are electronically coupled.

The term "mechanically coupled" in the present disclosure refers to two or more mechanical elements (for example, but not limited to, a frame, a surface, a support unit, a joint, etc.) being physically connected directly or indirectly in various ways such as using fastener(s), screws, nails, clasps, clamps, joints, pin joint, axle, hinge, adhesive, welding, soldering, and/or any other intermediary part or component, etc. The term "mechanically coupled" may refer to any of movable, turntable, swiveling, pivoting, fixed, and/or stationary, etc.

Various surfaces may require monitoring with respect to deformation(s) and detection of a deformation on the surface. A deformation may include any of distortion, twist, buckle, bend, warp, crack, and/or hole and may be resulted from a damage, collision, degradation, and/or an external force, etc. on the surface.

In various embodiments, methods, systems, devices, and/or apparatuses are provided to detect a deformation on a surface. For example, the surface may be on a bottom cover of an electric vehicle, such as a surface on the bottom cover facing a battery of the electric vehicle. In various embodiments, any other surface such as other surfaces of vehicles, containers, airplanes, ships, and/or building structures, foundations, etc. may be monitored. In example embodiments, the surface is monitored continually and/or at various time intervals to detect the deformation.

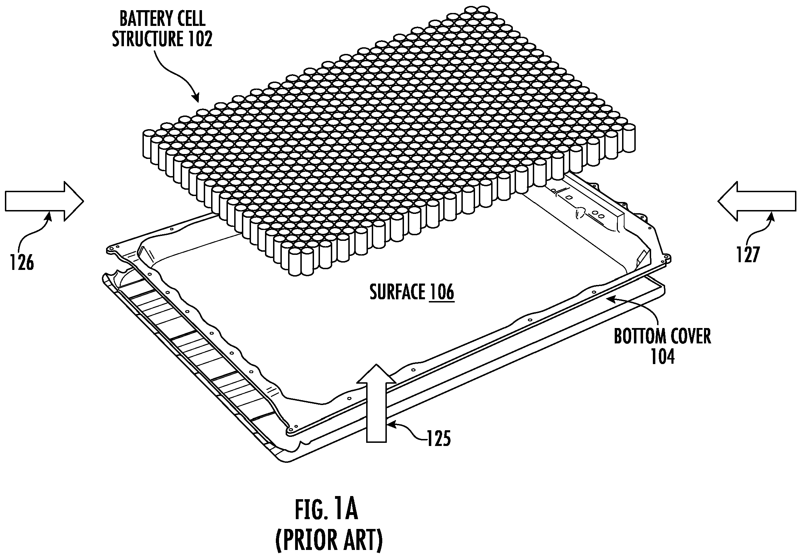

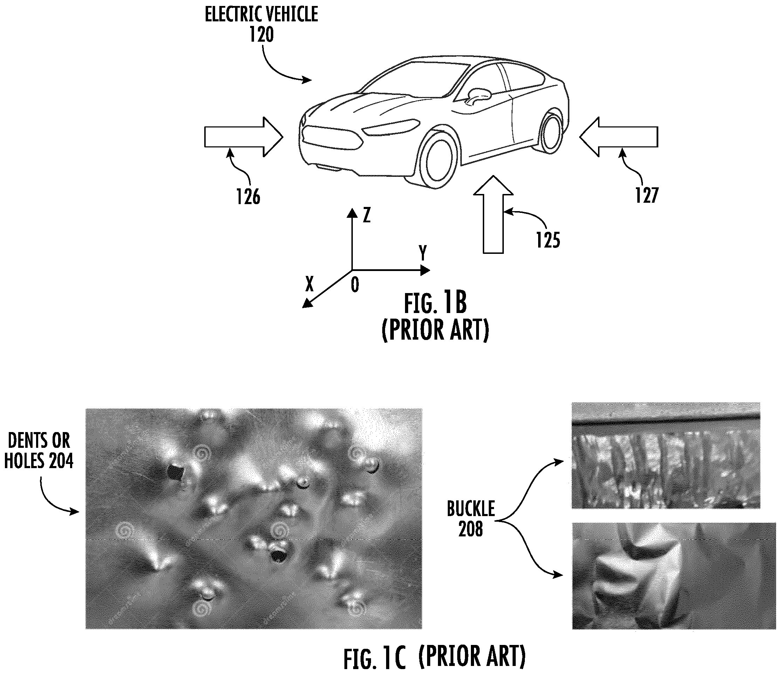

Referring now to FIG. 1A, FIG. 1B, and FIG. 1C a schematic diagram illustrating an electric vehicle battery and bottom cover is provided in accordance with the prior art. As used in various embodiments herein, an electric vehicle 120 may include a cell to chassis battery pack and/or a battery cell structure 102. In various embodiments, the battery cell structure may for example include a honeycomb structure as for example shown in the battery cell structure 102. In various embodiments, a bottom cover 104 is mechanically coupled to the battery cell structure directly or indirectly. The bottom cover 104 may also be part of the battery structure. In various embodiments, the bottom cover is configured to protect the battery. In various embodiments, the battery cell structure and the bottom cover form a chassis of the electric vehicle.

In various embodiments, the bottom cover 104 is located at a bottom of the electric vehicle and is configured to protect the battery from outside hazards such as rocks or other debris from the road and/or any other objects. The bottom cover 104 may be damaged in circumstances where the electric vehicle is involved in a collision, or when objects strike the bottom cover. As a result of the damage to the bottom cover 125, deformation including but not limited to any of dents or holes 204, buckle 208, etc. may appear on the surface 106 of the bottom cover 104.

In various embodiments, collision, impact by other objects, and/or forces from any direction, such as from the z direction 125, from the front direction 126 of the vehicle in the x-y plane, from the rear direction 127 of the vehicle in the x-y plane and/or any combination thereof, or any direction in the x, y, z dimensions may cause deformation on the surface 106.

The driver or other occupants of the vehicle may not realize occurrence of a deformation on the surface 106. For example, the impact by objects striking the bottom cover 104 may not be noticed by a driver or occupants of the vehicle, or a deformation caused by such may go unnoticed. However, the deformation may squeeze one or more battery cells, which could lead to some potential risks such as a thermal runaway which may put the vehicle and/or the occupants in danger of fire and/or smoke. A thermal runaway may be caused by a chain reaction causing heat and/or fire starting at one battery cell spreading rapidly to the other battery cells. For example, the thermal runaway may occur when the heat release rate from the chain reaction is larger than the cooling rate of the battery. When thermal runaway occurs, the battery may rapidly release large amount of heat and/or release flammable and/or toxic materials. It is therefore desirable to prevent thermal runaway and detect any condition that may trigger thermal runaway at an early stage.

The deformation may also damage the cooling system and/or any other supporting systems of the battery. It is therefore desirable to monitor the surface 106 and detect any deformation when it occurs.

Various embodiments of the present disclosure provide for monitoring the surface 106 continuously or at various time intervals. Various embodiments of the present disclosure provide for amplification of a deformation on the surface 106, for example for a more accurate and reliable detection of the deformation. Various embodiments of the present disclosure provide early warning of a deformation for example before the deformation causes any or any significant damage to the battery and/or before it results in any hazardous condition.

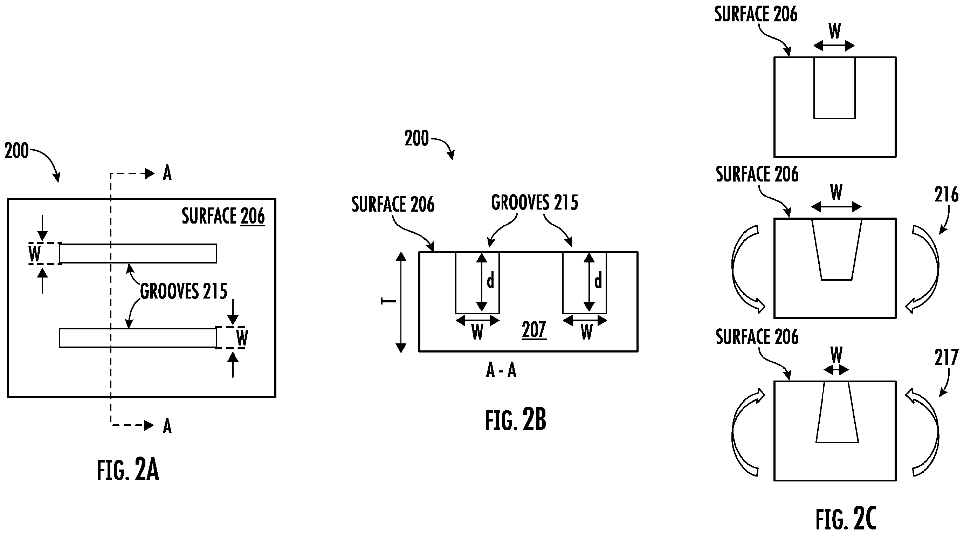

Referring now to FIG. 2A, a schematic diagram illustrating various aspects of a sensing system 200 is illustrated in accordance with various embodiments of the present disclosure. In various embodiments, the sensing system 200 includes grooves 215 on a surface 206. In various embodiments, any number of grooves having various shapes may be used. In example embodiments, the surface 206 is the surface of a bottom cover of an electric vehicle facing the battery. In various embodiments, the battery of the electric vehicle includes a battery cell structure, where the battery cell structure and the bottom cover may form a chassis of the electric vehicle. In example embodiments, the surface 206 is any surface requiring monitoring such as but not limited to a surface on the bottom cover of an electric vehicle, or other surfaces of vehicles, containers, airplanes, ships, and/or building structures, foundations, etc.

Referring now to FIG. 2B, a schematic diagram illustrating various aspects of a sensing system 200 viewed from a cross section is illustrated in accordance with various embodiments of the present disclosure. FIG. 2B illustrates the cross-section from the line-of-sight A-A in accordance with various embodiments of the present disclosure. In various embodiments, grooves 206 are formed in a material 207. Material 207 may for example be the material the chassis bottom cover 104 is made from. In example embodiments, the material 207 may include any metal and/or metal alloy such as steel, aluminum, and/or aluminum alloy, etc.

In example embodiments, a thickness T of the material 207 may be 3-7 mm. In example embodiments, the thickness T may be 3-5 mm. In example embodiments, a depth d of any of the grooves 215 may be 0.5-3mm. In example embodiments, a depth d of any of the grooves 215 may be 1-3mm. In example embodiments, a depth d of any of the grooves 215 may be 1-2mm. In example embodiments, a width w of an opening of the grooves 215 may be 0.2-2mm. In example embodiments, a width w of an opening of the grooves 215 may be 0.2-2mm. In example embodiments, a width w of an opening of the grooves 215 may be 0.5-1mm. In example embodiments, a width w of an opening of the grooves 215 may be 0.2-0.7mm.

Referring now to FIG. 2C schematic diagrams illustrating a deformation impact on the grooves is provided in accordance with a few examples in the present disclosure. In various embodiments, when a deformation occurs on the surface 206, shapes of any of the grooves 215 may change. For example, the opening width w of a groove may vary in response to the deformation. In example embodiments, the deformation causes a movement 216 in the material 207 near one of the grooves resulting the width w of the opening to increase. In example embodiments, the deformation causes a movement 217 in the material 207 near one of the grooves resulting the width w of the opening to decrease.

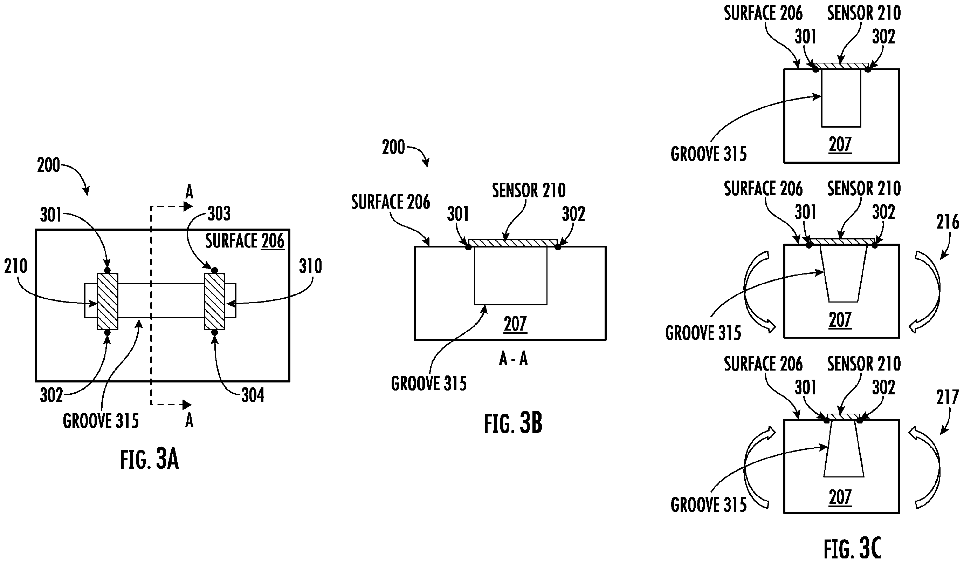

Referring now to FIGS. 3A-3C a schematic diagram illustrating various aspects of a sensing system 200 is illustrated in accordance with various embodiments of the present disclosure. In various embodiments, the sensing system 200 includes a groove 315 formed on a surface 206. The groove 315 includes an opening. In various embodiments, a distance between a first point 301 and a second point 302 on the surface 206 and across the opening of the groove 315 is configured to vary in response to a first deformation on the surface.

In various embodiments, a first sensor 210 is mechanically coupled to the first point 301 and the second point 302. In various embodiments, an electrical property of the first sensor 210 is configured to change in response to the variation in the distance between the first point 301 and the second point 302. In various embodiments, any of a resistance, capacitance, inductance, voltage of the sensor may change in response to the variation in the distance as a result of a deformation.

FIG. 3B illustrates a cross section of various aspects of the sensing system 200 from the line-of-sight A-A in accordance with various embodiments of the present disclosure. A deformation may cause the shape of the groove 315 to change. The change in the shape of the groove 315 may cause a width of the opening of the groove (for example width w with reference to FIG. 2C) to vary. In various embodiments, a first deformation may cause the distance between the first point 301 and the second point 302 to vary. The first deformation may for example occur in proximity of the first and second points 301 and 302, or otherwise impact the relative locations of the first and second points. In example embodiments, the first deformation is a deformation on the surface 206 in the direction of a line connecting the first and second points.

In various embodiments, the first point 301 and the second point 302 may be located across the opening of the groove. In various embodiments, because the first sensor 210 is mechanically coupled to the first and second points 301 and 302, a length of the first sensor 210 varies as a result of the variation in the distance between the first and second points.

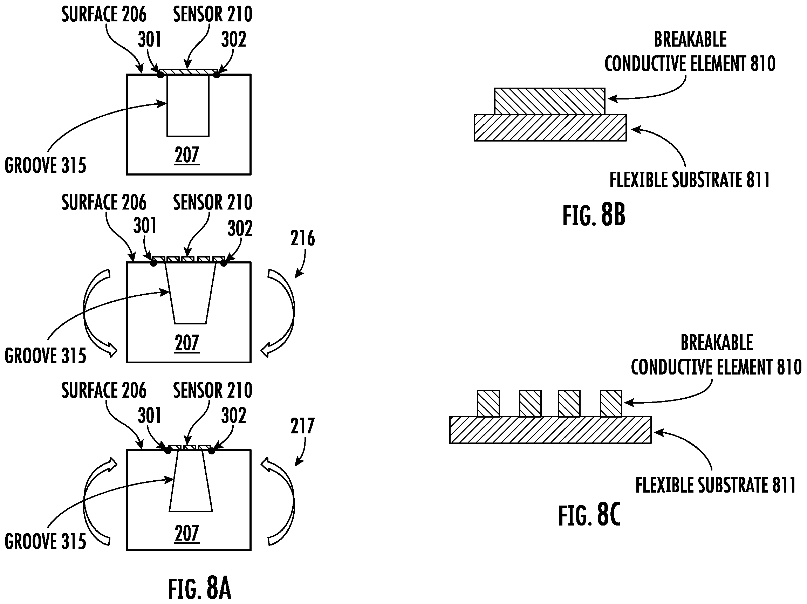

As for example illustrated by FIG. 3C, the first deformation may for example cause a movement 216 in the material 207 near the groove 315 such that the distance between the first and second points 310 and 302 increases. In another example, the first deformation may cause a movement 217 in the material 207 near the groove 315 such that the distance between the first and second points 310 and 302 decreases. In example embodiments, the increase or decrease in the distance between the first and second points 310 and 302 strains the sensor 210 and may cause a stretch and/or a compression and/or a breakage (as also described below for example with reference to FIGS. 8A, 8B) on at least an element of the sensor 210. In various embodiments, the stretch and/or compression caused on the sensor 210 changes an electrical property of the sensor 210. In various embodiments, the change in the electrical property of the first sensor is detected and an output indicating a presence of the first deformation using the detection of the change in the electrical property of the first sensor is generated.

In various embodiments, with reference to FIG. 3A, a second sensor 310 is coupled to a third point 303 and a fourth point 304 on the surface 206 and across the opening of the groove 315. In various embodiments, the distance between the third point 303 and the fourth point 304 varies in response to a second deformation, as for example similar to the change in the distance between the first and second point illustrated in FIG. 3C. The second deformation may for example occur in proximity of the third and fourth points 303 and 304, or otherwise impact the relative locations of the second and third points. In example embodiments, the second deformation is a deformation on the surface 206 in the direction of a line connecting the third and fourth points.

In various embodiments, the third point 303 and the fourth point 304 may be located across the opening of the groove. In various embodiments, because the second sensor 310 is mechanically coupled to the third and fourth points 303 and 304, a length of the second sensor 310 varies as a result of the variation in the distance between the third and fourth points.

In various embodiments, a line connecting the first point 301 and the second point 302 is distinct from and is approximately parallel to a line connecting the third point 303 and the fourth point 304, hence the direction of the first sensor may be approximately parallel to the direction of the second sensor. In various embodiments, a line connecting the first point and the second point is distinct from and intersects a line connecting the third point and the fourth point. Hence the direction of the first sensor may intersect the direction of the second sensor.

Therefore, in various examples, using a first sensor 210 and a second sensor 310 provides for a more comprehensive detection of deformations on a surface 206. For example, two different deformations at two different locations of the surface 206, each in proximity to a corresponding sensor, may be detected.

In various embodiments, the surface 206 includes one or more grooves. In various embodiments, one or more sensors are placed on each groove on the surface 206. In example embodiments, deformations in various directions on a surface may be detected by selecting various directions for the various sensors placed on the one or more grooves on the surface.

In various embodiments, an electrical property of any of the sensors affected by a deformation is configured to change in response to the variation in the distance between the corresponding points where the sensor is mechanically coupled to the surface. For example, an electrical property of the second sensor is configured to change in response to the variation in the distance between the third point and the fourth point. In various embodiments, an output indicating a presence of a deformation corresponding to any of the sensors using the detection of the change in the electrical property of the sensor is generated. For example, an output indicating a presence of the second deformation using the detection of the change in the electrical property of the second sensor is generated. In various embodiments, an alarm indicating a deformation is generated using any of the outputs indicating the presence of a deformation corresponding to any of the sensors. For example, an alarm using any of the output indicating the presence of the first deformation and the output indicating the presence of the second deformations is generated.

In various embodiments, any of the one or more sensors, such as the first sensor 210 and/or the second sensor 310, may be a strain gauge sensor where one or more of its electrical properties may vary as a result of a stretch or compression imposed on the sensor due to a deformation on the surface 206. In various embodiments, the stretch or compression results in a change in a length of an element of the sensor, such as a resistive, capacitive, inductive, and/or piezo electric element, etc. For example, the sensors may include any of a resistive, capacitive, and/or inductive strain gauge sensor and/or any combination thereof. In various examples, the sensors may include a piezo electric material configured to generate a voltage level proportional to the amount of stretch and/or compression applied to the sensor.

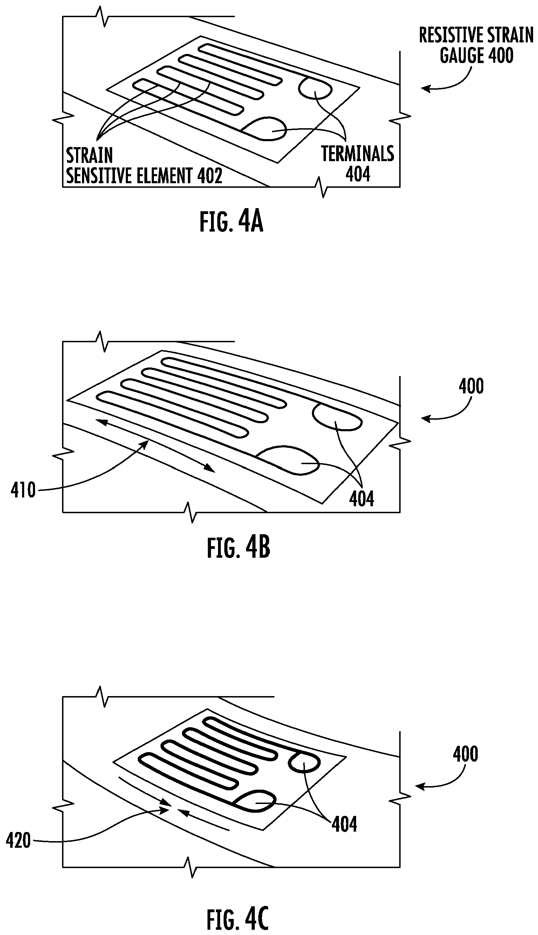

Referring now to FIGS. 4A-4C a schematic diagram illustrating a resistive strain gauge 400 is provided in accordance with various embodiments of the present disclosure. In various embodiments, a resistance of the resistive strain gauge 400 varies when it is stretched and/or compressed. In various embodiments, the resistive strain gauge 400 includes a resistive strain sensitive element 402. The resistance of the resistive strain sensitive element 402 is changed when the resistive strain gauge 400 is stretched for example as shown in FIG. 4C and/or compressed for example as shown in FIG. 4C. In various embodiments, the resistive strain sensitive element 402 may include conductive material where a cross section area of parts or all of the resistive strain sensitive element 402 and consequently its resistance as measured at the terminals 404 changes due to a tension and/or a movement causing stretch 410 or compression 420 on the sensor.

For example, as a result of the stretch 410 the cross-section area of part or all of the resistive strain sensitive element 402 decreases and the resistance of the resistive strain sensitive element 402 increases. For example, as a result of the compression 420 the cross-section area of part or all of the resistive strain sensitive element 402 increases and the resistance of the resistive strain sensitive element 402 decreases.

In various embodiments, the resistance between the terminals 404 changes due to and proportional to a tension causing any combination of stretch and/or compression on various parts of the resistive strain sensitive element 402. In various embodiments, the tension on the resistive strain gauge 400 causes the resistance between the terminals 404 to change.

In various embodiments, the tension on the resistive strain gauge 400 is due to and proportional to the variation in the distance between the two points where a sensor is mechanically coupled to the surface where the deformation occurs, for example the first point 301 and the second point 302 where the sensor 210 is mechanically coupled to the surface 206. The change in resistance between the terminals 404 may therefore be used to determine the variation in the distance because the change in the resistance is proportional to the variation in a length of the sensor, hence the variation in the distance between the two points. In various embodiments, the variation in the distance between the two points is due to a deformation on the surface 206. In various embodiments, a variation in the distance between the two points lager than a movement threshold is an indication of a deformation on the surface 206. In various embodiments, the deformation on the surface 206 is detected when the resistance is outside a normal resistance range, which implies that the variation in the distance between the two points is larger than the movement threshold.

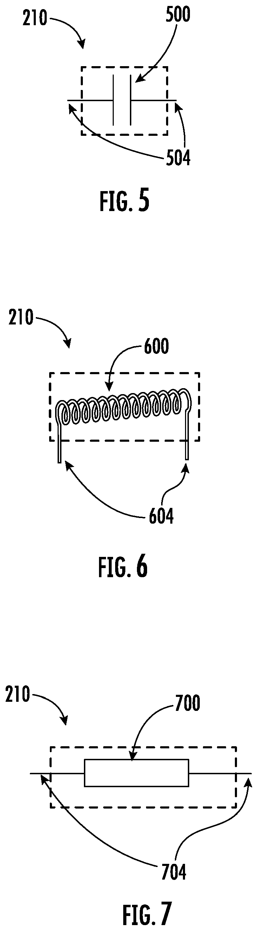

Referring now to FIG. 5 a schematic diagram illustrating the sensor 210 is provided in accordance with various embodiments of the present disclosure. In various embodiments, the sensor 210 comprises a capacitive strain gauge. In various embodiments, a capacitance of the strain gauge sensor varies due to and proportional to the variation in the distance between the two points where a sensor is mechanically coupled to the surface, for example the first point 301 and the second point 302 where the sensor 210 is mechanically coupled to the surface 206. The variation in the distance between the two points may cause a strain on the sensor 210 which may cause a stretch, a compression, and/or any combination of stretch and compression in various locations on the sensor 210.

In various embodiments, any of the stretch and/or compression causes plates of a capacitor 500 to move relative to each other, hence causing the capacitance of the capacitor 500 to vary. In various embodiments, the deformation is detected when the capacitance is outside a normal capacitance range.

Referring now to FIG. 6 a schematic diagram illustrating sensor 210 is provided in accordance with various embodiments of the present disclosure. In various embodiments, the sensor 210 comprises an inductive strain gauge. In various embodiments, an inductance of the strain gauge sensor varies due to and proportional to the variation in the distance between the two points where a sensor is mechanically coupled to the surface, for example the first point 301 and the second point 302 where the sensor 210 is mechanically coupled to the surface 206. The variation in the distance between the two points may cause a strain on the sensor 210 which may cause a stretch, a compression, and/or any combination of stretch and compression in various locations on the sensor 210.

In various embodiments, any of the stretch and/or compression causes loops of an inductor 500 to move relative to each other, hence causing the inductance of the inductor 500 to vary. In various embodiments, the deformation is detected when the inductance is outside a normal inductance range.

In various embodiments, the sensor 210 may include a stain gauge including any combination of the resistive, capacitive and/or inductive strain gauges.

Referring now to FIG. 7 a schematic diagram illustrating sensor 210 is provided in accordance with various embodiments of the present disclosure. In various embodiments, the sensor 210 comprises a piezoelectric material 700. The variation in the distance between the two points where a sensor is mechanically coupled to the surface, for example between the first point 301 and the second point 302 where the sensor 210 is mechanically coupled to the surface 206, may cause a strain on the sensor 210 which may cause a stretch, a compression, and/or any combination of stretch and compression in various locations on the piezoelectric material 700. The piezoelectric material may produce a voltage as a result of and proportional to the stretch, compression, and/or any combination of stretch and compression in various locations on it.

In various embodiments, the variation in the distance between the two points causes the strain on the sensor 210, consequently the piezoelectric material generates a voltage due to and proportional to the variation in the distance between the two points. In various embodiments, the deformation is detected when the voltage is outside a normal voltage range.

Referring now to FIG. 8A a schematic diagram illustrating various aspects of a sensing system is provided in accordance with various embodiments of the present disclosure. In various embodiments, any of the one or more sensors, such as the first sensor 210 and/or the second sensor 310, may include a breakable conductive element. In various embodiments, breakable conductive element is configured to lose its conductivity as a result of the strain imposed on the sensor due to a deformation on the surface 206. For example, the breakable conductive element is configured to break, hence loose its conductivity as a result of the strain.

In various embodiments, any of the sensors, for example sensor 210 as illustrated in the example of FIG. 8A includes a breakable conductive element. In various embodiments, the breakable conductive element loses its conductivity and generates an open circuit between the first point 301 and the second point 302 due to the variation in the distance between the first point 301 and the second point 302. In various embodiments, the first deformation is detected by detecting the generated open circuit.

As for example illustrated by FIG. 8A, the first deformation may for example cause a movement 216 in the material 207 near the groove 315 such that the distance between the first and second points 310 and 302 increases. In another example, the first deformation may cause a movement 217 in the material 207 near the groove 315 such that the distance between the first and second points 310 and 302 decreases. In example embodiments, the increase or decrease in the distance between the first and second points 310 and 302 strains the sensor 210 and may cause the breakage on at least the breakable conductive element of the sensor 210. In various embodiments, the loss of conductivity is detected and an output indicating a presence of the first deformation using the detection of the loss of conductivity of the first sensor is generated. In various embodiments, various sensors that include a breakable conductive element may be used on one or more grooves and in various locations and/or directions to detect deformations in various locations and/or directions on the surface 206 as for example previously described with reference to FIGS. 2A-3C.

Referring now to FIG. 8B a schematic diagram illustrating various aspects of a sensor with a breakable conductive element 810 is provided in accordance with various embodiments of the present disclosure. In various embodiments, the sensor includes a flexible substrate 811. In various embodiments, the flexible substrate 811 is configured to hold the breakable conductive element 810. In various embodiments, a length of the flexible substrate 811 is configured to change because of the variation in the distance between the first point and the second point where the sensor is mechanically coupled to the surface.

In various embodiments, the breakable conductive element 810 is mechanically coupled to the flexible substrate 811. In various embodiments, the breakable conductive elements may break and loose conductivity as a result of a variation in the distance between the first and second points due to a deformation, while still being held and/or mechanically coupled to the flexible substrate as for example illustrated by the example schematic in FIG. 8C.

In various embodiments, the breakable conductive element includes any of breakable metal and/or nanocrystal metal. In example embodiments, nanocrystal metals may include any electrically conductive nanoparticles such as conductive nanoparticles made from any of gold, aluminum, platinum, palladium, graphite, silver, nickel, and/or copper, etc. In various embodiments, the flexible substrate 811 includes any of flexible plastic and/or rubber.

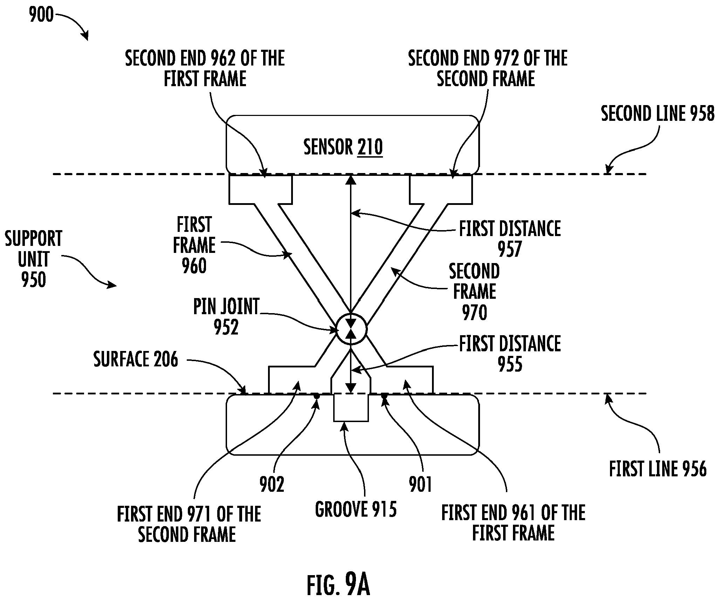

Referring now to FIG. 9A a schematic diagram illustrating various aspects of a sensing system 900 is provided in accordance with various embodiments of the present disclosure. In various embodiments, a supporting unit is mechanically coupled between a first and second point across a groove and the sensor. In various embodiments, the supporting unit may be any of the supporting units disclosed in the CN Patent Application No. , which is incorporated herein in its entirety.

In various embodiments, a supporting unit 950 is mechanically coupled to the first point 901 and the second point 902 located across a groove 915. In various embodiments, a first end 961 of a first frame 960 of the supporting unit 950 is mechanically coupled to the first point 901 and a first end 971 of the second frame 970 is mechanically coupled to the second point 902. In various embodiments, the second end 962 of the first frame 960 and the second end 972 of the second frame 970 are mechanically coupled to a sensor, for example sensor 201. In various embodiments, the first frame crosses the second frame and is mechanically coupled to the second frame at a pin joint 952.

In example embodiments, a deformation on the surface 206 results in a relative movement between the first point 901 and the second point 902 and/or result in a change in a distance between the first point 901 and the second point 902 as for example described above. In various embodiments, the relative movement between the first point and the second point cause a relative movement between the first end of the first and second frames, because the first end of the first and second frames are mechanically coupled to the first and second points. In example embodiments, the supporting unit 950 amplifies and transmits the relative movement between the first and second points to a relative movement between the second ends of the first frame and the second frames.

In various embodiments, the support unit 950 includes the pin joint 952 configured to mechanically couple the first frame 960 to the second frame 970 such that a first relative movement between the first end of the first frame 961 and the first end of the second frame 971 is amplified to a second relative movement between the second end of the first frame 962 and the second end of the second frame 972. In various embodiments, the first frame crosses the second frame at the pin joint and the first and second frames are each configured to pivot independently around the pin joint for example in a scissors-like movement.

In various embodiments, a first distance 955 is a distance between the pin joint 952 and a first line 956 passing through the first end of the first frame 961 and the first end of the second frame 971. In various embodiments, the distance is measured as a length of a line perpendicular to the first line 956 and connecting a center of the pin joint 952 with the first line 956.

In various embodiments, a second distance 957 is a distance between the pin joint 952 and a second line 958 passing through the second end of the first frame 962 and the second end of the second frame 972. In various embodiments, the distance is measured as a length of a line perpendicular to the second line 958 and connecting a center of the pin joint 952 with the second line 958.

In various embodiments, the first distance 955 is less than the second distance 957. In various embodiments, the support unit 950 amplifies the first relative movement between the first ends of the first and second frames proportional to a ratio of the second distance 957 to the first distance 955. For example, if the second distance 957 is N times the first distance 952, the second relative movement is N times the first relative movement.

In example embodiments, N may have any real or integer values. In example embodiments, 1<N<15. In example embodiments, 1<N<12. In example embodiments, 1<N<10. In example embodiments, 2<N<10. In example embodiments, 3<N<10. Various embodiments herein are not limited to any of the values described herein and any other values may be used.

In various embodiments, the sensor 210 is mechanically coupled to the second end of the first frame 962 and the second end of the second frame 972. In various embodiments, the sensor 210 is configured to sense the second relative movement between the second end of the first frame 962 and the second end of the second frame 972 which is an amplification of the first relative movement between the first and second ends, which is approximately equal to the relative movement between the first and second points on the surface.

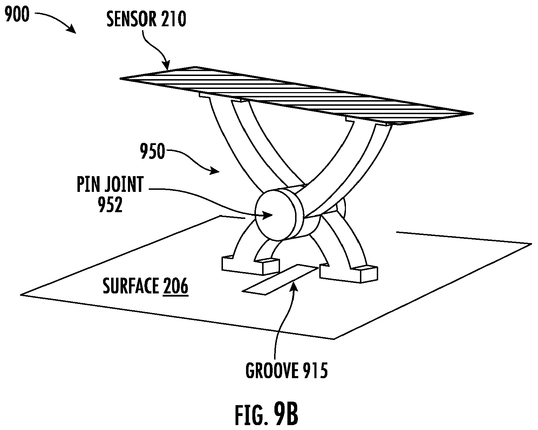

In various embodiments, the first frame 960 and the second frame 970 are made from rigid materials such as metal, hard plastic, Acrylonitrile Butadiene Styrene (ABS), and/or any thermoplastic polymer, etc. In various embodiments, the first frame 960 and the second frame 970 may have any geometrical shapes. In various embodiments, the first frame 960 and the second frame 970 may have similar or different shapes. For example, the first and/or second frame may have linear shapes. For example, any of the first and/or second frames may have curved shapes. For example, a first part of the first frame from the first end of the first frame to the pin joint may have a convex shape and a second part of the first frame form the pin joint to the second end of the first frame may have a concave shape as for example shown in FIG. 9B. For example, a first part of the second frame from the first end of the second frame to the pin joint may have a convex shape and a second part of the first frame form the pin joint to the second end of the second frame may have a concave shape as for example shown in FIG. 9B. The first and second frame may have various other shapes and combinations thereof.

In example embodiments, a groove provides for an increase in a relative movement between the points across the groove on the surface and therefore enhances the detection of a deformation. In example embodiments, the support unit provides for further amplification of the relative movement between the points across a groove and may provide for further enhancement in the detection of the deformation.

In various embodiments, multiple supporting units mechanically coupled to each other at their respective pin joints may be used. In various embodiments, each of the first ends of the frames of the supporting units are mechanically coupled to points across the groove respectively, and the second ends of the frame of the supporting units are mechanically coupled to a sensor. In various embodiments, the groove may have any of the groove shapes described herein. In example embodiments, using multiple supporting units provide for detection of deformation in various locations and/or directions on the surface.

In example embodiments, the amplified relative movement between the second ends of the first and second frames are sensed using the sensor 210 using any of the methods and/or devices described herein. In example embodiments, any of the methods, devices, and techniques described in the CN Patent Application No. , which is incorporated herein in its entirety, for example with respect to amplifying and/or transmitting the relative movement on the surface may be used.

In various embodiments, one or more supporting frames may be located across one or more grooves and in various directions. In example embodiments, various shapes and directions in placing the supporting frame may provide for detecting, transmitting and/or amplifying deformations in various locations and directions on the surface as described herein.

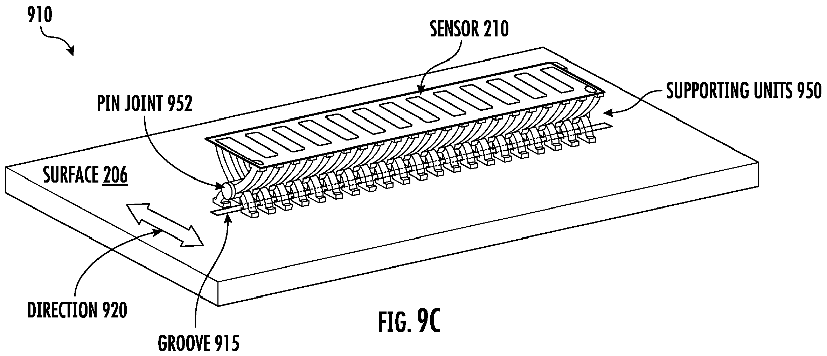

Referring now to FIG. 9C, a schematic diagram illustrating various aspects of a sensing system 910 is provided in accordance with various embodiments of the present disclosure. In various embodiments, the sensing system 910 includes two or more support units 950. In various embodiments, each support unit of the support units 950 include a first frame and a second frame similar to the support units described above for example with reference to FIGS. 9A-9B. In various embodiments, a first end of each first frame and a first end of each second frame of the support units are configured to mechanically couple to a surface 206. In example embodiments, the surface 206 is a surface of a bottom cover 104 of an electric vehicle facing the battery pack of the vehicle.

In various embodiments, a pin joint 952 is configured to mechanically couple each first frame to each corresponding second frame of the supporting units 950. In various embodiments, the first ends of the first and second frames of each supporting unit is mechanically coupled to points across a groove 915, for example as illustrates in FIG, 9C. In various embodiments, the pin joint 952 is configured to mechanically couple each first frame to each corresponding second frame such that a first relative movement between the first end of the first frame and the first end of the corresponding second frame is amplified to a second relative movement between a second end of the first frame and a second end of the corresponding second frame for example in a similar way as described with reference to FIGS. 9A-9B. In various embodiments, the pin joint 952 is shared among the support units 950. In various embodiments, the support units 950 share an axle where each first frame and the corresponding second frame of the support units cross each other. In various embodiments, each supporting unit has its own pin joint, where the pin joints of any two adjacent supporting units of the supporting units 950 are mechanically coupled to each other.

In various embodiments, a sensor 210 is mechanically coupled to second ends of the first frames and second ends of the second frames of the support units 950. In various embodiments, the sensor 210 is configured to sense the second relative movement between the second ends of any of the supporting units. In example embodiments, the sensor 210 is configured to detect deformation in a plane perpendicular to the surface 906 and parallel to the direction 920. In example embodiments, the direction 920 is a direction across the groove 915. For example, the deformation may be any of a stretch, tear, hole, and/or opening, etc. in the direction 920 on the surface 206, or any of a dent, buckle, bent, etc. in a plane perpendicular to the surface 906 and in the direction 920. In example embodiments, when the deformation moves first ends of one or more pair of corresponding first, and second frames of the supporting units 950. Any deformation that moves any pair of first ends and is amplified to a second relative movement between a pair of second ends may be sensed by the sensor 210.

In various embodiments, the sensor 210 includes an electrical component configured to have a variable electrical property as a result of the second relative movement. For example, as previously described, the sensor 210 may include any of the resistive, capacitive, and/or inductive strain gauge sensors. In various embodiments, the sensor 210 may include a piezoelectric material. In various embodiments, the sensor 210 may include a breakable conductive material.

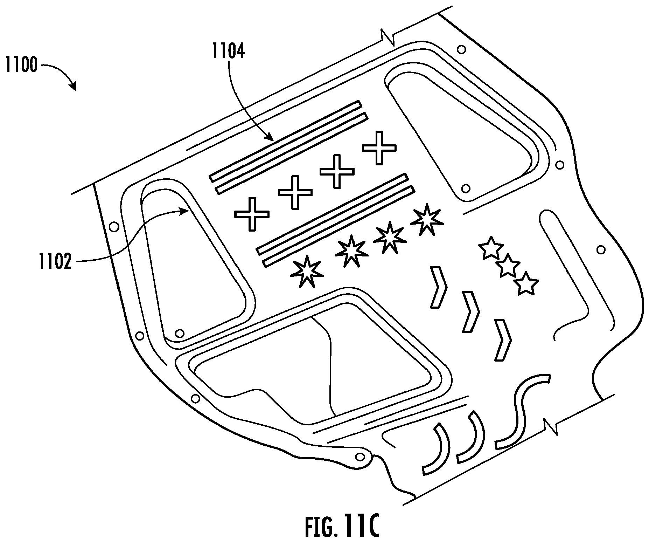

In various embodiments, the supporting units may be placed next to each other such that they form a curved arrangement across a curve-shaped groove. In various embodiments, the supporting units may form any linear, curved, zigzag, and/or any combination thereof, etc. arrangement across a similarly shaped groove (such as the example grooves illustrated with reference to FIG. 11 C). In example embodiments, arranging the supporting units and grooves in various shapes other than and/or in addition to a straight line provides for detection of deformations in different and more diverse directions.

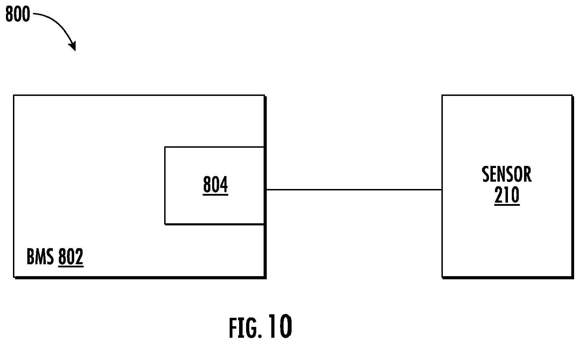

Referring now to FIG. 10 a schematic diagram illustrating a system 800 for communicating with the sensor is provided in accordance with various embodiments of the present disclosure.

In various embodiments, the electric vehicle may include a Battery Management System (BMS) 802. In various embodiments, the BMS 802 may be part of or electronically coupled to a Vehicle Control Unit (VCU). The BMS 802 may include a detection module 804. The detection module 804 communicates with the sensor 210 and is configured to detect a change in the electrical property of the first sensor 210.

In various embodiments, the detection module 804 includes a voltmeter configured to determine the voltage generated by the piezoelectric material of the sensor 210.

In various embodiments, the detection module 804 includes a resistance meter configured to determine a resistance of the resistive strain gauge of the sensor 210. For example, the module 804 may include a current source to generate a current that passes through the resistive strain gauge and a voltage meter configured to determine the resulting voltage. In various embodiments, a voltage source may be applied a voltage to the resistive strain gauge and the resulting current may be measured. In various embodiments, the resistance of the resistive strain gauge is determined using the ratio of the voltage to current. In various examples, the current may be direct current (DC) or alternating current (AC). In various embodiments, the detection module determines whether the sensor 210 is conductive or an open circuit. For example, if a resistance determined by the detection module is above an open circuit threshold, the detection module detects an open circuit in the senor 210. In various embodiments, when applying a voltage to the sensor 210, if the detected current passing thought the sensor 210 is below an open circuit current threshold, the detection modules detect an open circuit in the sensor 210.

In various embodiments, the detection module 804 includes a capacitance meter configured to determine a capacitance of the capacitive strain gauge of the sensor 210. For example, the module 804 may include a current source to generate a current that passes through the capacitive strain gauge and a voltage meter configured to determine the resulting voltage. In various embodiments, the capacitance of the capacitive strain gauge is determined using a ratio of the measured voltage change rate to the applied current.

In various embodiments, the detection module 804 includes a capacitance meter configured to determine a capacitance of the capacitive strain gauge of the sensor 210. For example, the module 804 may include a varying current source to generate a current that passes through the capacitive strain gauge and a voltage meter configured to determine the resulting voltage. In various embodiments, the capacitance of the capacitive strain gauge is determined using a ratio of the measured voltage change rate to the applied current.

In various embodiments, the detection module 804 includes an inductance meter configured to determine an inductance of the indictive strain gauge of the sensor 210. For example, the module 804 may include a varying voltage source to generate a voltage that is applied to the inductive strain gauge and a current meter configured to determine the resulting current. In various embodiments, the inductance of the inductive strain gauge is determined using a ratio of the measured current change rate to the applied voltage.

In various embodiments, the BMS 802 may detect the deformation using any of the voltage generated by the piezoelectric material, resistance value of the resistive strain gauge, open circuit or conductance determination, capacitance of the capacitive strain gauge, and inductance of the inductive strain gauge, and/or any combination of the above when the senor 210 includes two or more of the strain gauges described herein. In various embodiments, the BMS 802 provides appropriate outputs, such as warning on a display of the vehicle and/or communicate with emergency services when a deformation is detected on the bottom cover of the vehicle, for example the bottom cover 104.

In various embodiments, a deformation may cause the frames of a support unit to break, and or any of the sensor 210 (which may include any of or any combination of the types of sensors described above) to break or malfunction. In various embodiments, when the sensor 210 does not operate as intended, the BMS 802 determines that there is a deformation cause the malfunction.

In various embodiments, the detection circuitry 804 generates the output indicating a presence of the first deformation using the detection of the change in any one or more of the electrical properties of one sensor, for example sensor 210. In various embodiments, the detection circuitry 804 is electronically coupled to one or more other sensors. In various embodiments, the detection circuitry 804 generates the output indicating a presence of other deformation(s) using the detection of the change in any one or more of the electrical properties of any other sensor(s).

In various embodiments, the BMS 802 may detect the deformation using any of the outputs by the detection circuitry 804. In various embodiments, the BMS 802 may detect the deformation and/or generate one or more alarm(s) using any output(s) from the detection circuitry indicating presence of one or more deformations using the detection of the change in any one or more of the electrical properties of various sensors located on various parts of the surface.

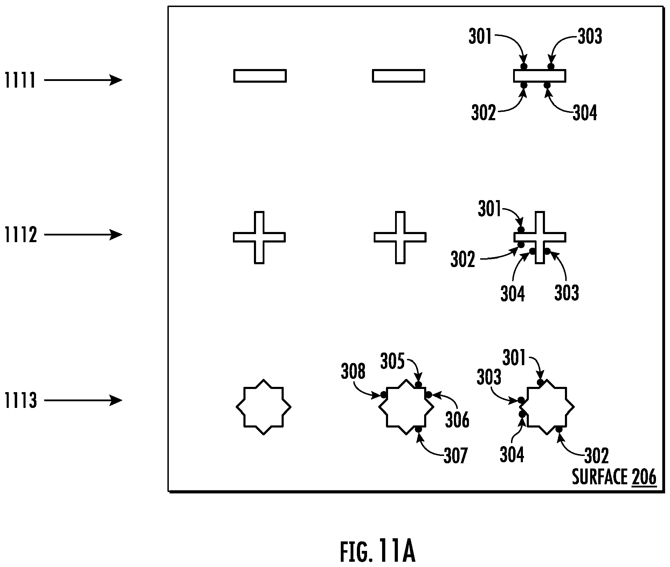

Referring now to FIG. 11A a schematic diagram illustrating various shapes of grooves is provided in accordance with various embodiments of the present disclosure. In various embodiments, various shapes of grooves may be used for determining deformation(s) on various locations and in various directions on a surface. In example embodiments, different shapes of the grooved may provide for mechanically coupling a sensor in multiple parallel and/or nonparallel direction on one groove hence providing for detecting various directions of deformation using each groove.

In example embodiments, one or more grooves 1111 having an approximately straight-line shapes may be used on the surface 206. For example, a sensor may be mechanically coupled to the first point 301 and the second point 302 across a groove in the example illustrated in FIG. 11A. In an example, another sensor may be mechanically coupled to the third point 303 and the fourth point 304 across a groove. In example embodiments, the direction between the first and second point may be parallel to or intersecting with the direction between the third and the fourth points.

In example embodiments, one or more grooves 1112 having cross shapes may be used on the surface 206. For example, a sensor may be mechanically coupled to the first point 301 and the second point 302 across a groove in the example illustrated in FIG. 11A. In an example, another sensor may be mechanically coupled to the third point 303 and the fourth point 304 across another section of the cross-shape groove in the example illustrated in FIG. 11A. In example embodiments, the direction between the first and second point intersects with the direction between the third and the fourth points. In example embodiments, other sensors may be mechanically coupled on other points across various sections of the groove with directions parallel to or intersecting each other.

In example embodiments, one or more grooves 1113 having cross shapes may be used on the surface 206. For example, a sensor may be mechanically coupled to the first point 301 and the second point 302 across a groove in the example illustrated in FIG. 11A. In an example, another sensor may be mechanically coupled to the third point 303 and the fourth point 304 across another section of the cross-shape groove in the example illustrated in FIG. 11A. In example embodiments, the direction between the first and second point intersects with the direction between the third and the fourth points. In example embodiments, other sensors may be mechanically coupled on other points across various sections of the groove with directions parallel to or intersecting each other.

In example embodiments, one or more grooves 1113 having star shapes may be used on the surface 206. For example, a sensor may be mechanically coupled to the first point 301 and the second point 302 across a groove in the example illustrated in FIG. 11A. In an example, another sensor may be mechanically coupled to the third point 303 and the fourth point 304 across another section of the star-shape groove in the example illustrated in FIG. 11A. In an example, another sensor may be mechanically coupled to the fifth point 305 and the sixth point 306 in the example illustrated in FIG. 11A. In an example, another sensor may be mechanically coupled to the seventh point 307 and the eight point 308. In example embodiments, the directions between the various points where various sensors are couple to are parallel to or intersect with the direction between the points another sensor is coupled to.

In various embodiments, any other shapes, numbers, and/or arrangement of grooves may be used on the surface. For example, the grooves may have shapes such as straight line, curved line, zigzag line, circular, oval, square, or any other geometrical shapes. In various embodiments, sensors may be mechanically coupled to any other points across various sections of the groove with directions parallel to or intersecting each other. In example embodiments, having various sections and directions covered with sensors provides for detection of deformations in the various sections and directions on the surface 206.

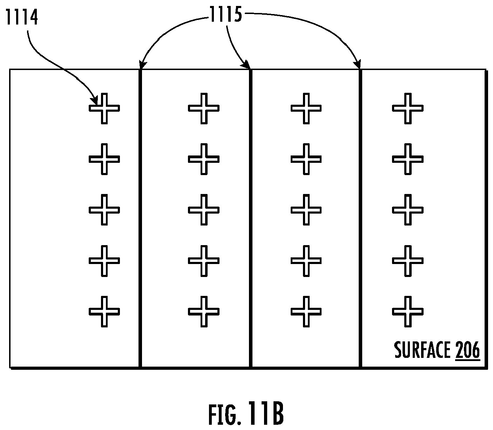

Referring now to FIG. 11B a schematic diagram illustrating a surface having grooves and ribs is provided in accordance with various embodiments of the present disclosure. In various embodiments, grooves 1114 may be placed on various locations on the surface 206. In various embodiments, grooves 1114 may have any other shapes besides the cross-shapes illustrated by FIG. 11B. In various embodiments, the surface 206 may include ribs 1115. The number, shape, and location of the ribs in FIG. 11B are for example purposes and surface 206 may include any other number, shapes, and/or locations for ribs 1115. In example embodiments, ribs 1115 are added to the surface to enhance a strength of the surface. For example, when the surface 206 is a surface on the chassis of a vehicle, the ribs 1115 enhance the strength of the chassis.

In various embodiments, the grooves may be placed on the areas of the surface 206 where there are no or less ribs. In various embodiments, the grooves are placed more densely on the areas of the surface 206 where there are no or less ribs. For example, the grooves and the sensors additionally coupled to the grooves provide detection of the areas of the surface that has less strength against deformation.

Referring now to FIG. 11C a schematic diagram illustrating various aspects of a bottom cover 1100 of an electric vehicle is provided in accordance with various embodiments of the present disclosure. In various embodiments, the bottom cover 1100 includes various ribs 1102. In various embodiments, the location of various ribs and/or other variations in a surface of the bottom cover 1100 may result in different needs for monitoring for deformation in different locations on the bottom cover 1100. In example embodiments, ribs such as ribs 1102 may enhance the strength of the bottom cover, hence areas with no ribs may require closer monitoring for deformation.

In example embodiments, various arrangements and shapes of the grooves 1104, such as example shapes or arrangements illustrated in FIG 11 C, or any other shapes and/or arraignment of grooves for monitoring different areas and different directions on the bottom cover 1100 may be used. In various embodiments, the sensor systems for example sensing systems 200, 900, 910 described herein may be located on any surfaces and/or types of surfaces, for example bottom cover of a vehicle, where detecting a deformation is desired.

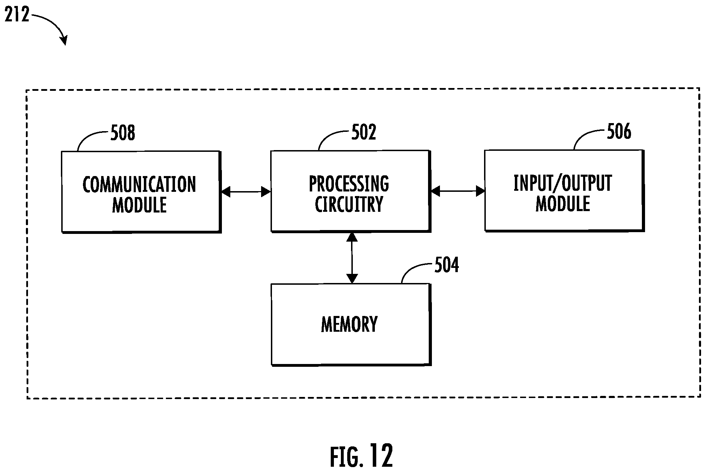

Referring now to FIG. 12, a schematic diagram depicting an example controller 212 of an example apparatus in electronic communication with various other components in accordance with various embodiments of the present disclosure is provided. For example, as described herein, the controller 212 may be in electronic communications with any of the sensor devices and/or with the BMS or VCU. In various embodiments, any of the BMS or the VCU may include the controller 212. As shown, the controller 212 comprises processing circuitry 502, a communication module 508, input/output module 506, a memory 504 and/or other components configured to perform various operations, procedures, functions or the like described herein.

In various embodiments, the controller 212 (such as the processing circuitry 502, communication module 508, input/output module 506 and memory 504) is electrically coupled to and/or in electronic communication with the sensors, detection module, BMS, and/or VCU. In various embodiments, any of the sensors, detection module, BMS, and/or VCU may exchange (e.g., transmit and receive) data with the processing circuitry 502 of the controller 212.

The processing circuitry 502 may be implemented as, for example, various devices comprising one or a plurality of microprocessors with accompanying digital signal processors; one or a plurality of processors without accompanying digital signal processors; one or a plurality of coprocessors; one or a plurality of multi-core processors; one or a plurality of controllers; processing circuits; one or a plurality of computers; and various other processing elements (including integrated circuits, such as ASICs or FPGAs, or a certain combination thereof). In some embodiments, the processing circuitry 502 may comprise one or more processors. In one exemplary embodiment, the processing circuitry 502 is configured to execute instructions stored in the memory 504 or otherwise accessible by the processing circuitry 502. When executed by the processing circuitry 502, these instructions may enable the controller 212 to execute one or a plurality of the functions as described herein. No matter whether it is configured by hardware, firmware/software methods, or a combination thereof, the processing circuitry 502 may comprise entities capable of executing operations according to the embodiments of the present invention when correspondingly configured. Therefore, for example, when the processing circuitry 502 is implemented as an ASIC, an FPGA, or the like, the processing circuitry 502 may comprise specially configured hardware for implementing one or a plurality of operations described herein. Alternatively, as another example, when the processing circuitry 502 is implemented as an actuator of instructions (such as those that may be stored in the memory 504), the instructions may specifically configure the processing circuitry 502 to execute one or a plurality of methods, algorithms and operations described herein, such as those discussed with reference to any of the figures herein.

The memory 504 may comprise, for example, a volatile memory, a non-volatile memory, or a certain combination thereof. Although illustrated as a single memory in FIG. 5, the memory 504 may comprise a plurality of memory components. In various embodiments, the memory 504 may comprise, for example, a hard disk drive, a random access memory, a cache memory, a flash memory, a Compact Disc Read-Only Memory (CD-ROM), a Digital Versatile Disk Read-Only Memory (DVD-ROM), an optical disk, a circuit configured to store information, or a certain combination thereof. The memory 504 may be configured to store information, data, application programs, instructions, and etc., so that the controller 212 can execute various functions according to the embodiments of the present disclosure. For example, in at least some embodiments, the memory 504 is configured to cache input data for processing by the processing circuitry 502. Additionally or alternatively, in at least some embodiments, the memory 504 is configured to store program instructions for execution by the processing circuitry 502. The memory 504 may store information in the form of static and/or dynamic information. When the functions are executed, the stored information may be stored and/or used by the controller 212.

The communication module 508 may be implemented as any apparatus included in a circuit, hardware, a computer program product or a combination thereof, which is configured to receive and/or transmit data from/to another component or apparatus. The computer program product comprises computer-readable program instructions stored on a computer-readable medium (for example, the memory 504) and executed by a controller 212 (for example, the processing circuitry 502). In some embodiments, the communication module 508 (as with other components discussed herein) may be at least partially implemented as the processing circuitry 502 or otherwise controlled by the processing circuitry 502. In this regard, the communication module 508 may communicate with the processing circuitry 502, for example, through a bus. The communication module 508 may comprise, for example, antennas, transmitters, receivers, transceivers, network interface cards and/or supporting hardware and/or firmware/software, and is used for establishing communication with another apparatus. The communication module 508 may be configured to receive and/or transmit any data that may be stored by the memory 504 by using any protocol that can be used for communication between apparatuses. The communication module 508 may additionally or alternatively communicate with the memory 504, the input/output module 506 and/or any other component of the controller 212, for example, through a bus.

In some embodiments, the controller 212 may comprise an input/output module 506. The input/output module 506 may communicate with the processing circuitry 502 to receive instructions input by the user and/or to provide audible, visual, mechanical or other outputs to the user. Therefore, the input/output module 506 may be in electronic communication with supporting devices, such as a keyboard, a mouse, a display, a touch screen display, and/or other input/output mechanisms. Alternatively, at least some aspects of the input/output module 506 may be implemented on a device used by the user to communicate with the controller 212. The input/output module 506 may communicate with the memory 504, the communication module 508 and/or any other component, for example, through a bus. One or a plurality of input/output modules and/or other components may be included in the controller 212.

In various embodiments, various steps of the methods herein may be performed by any of a BMS, VCU, detection module, and/or controller 212. As noted above the BMS, VCU, and/or the detection module may include the controller 212 described above in regard to FIG. 12 and may similarly comprise processing circuitry 502, a communication module 508, an input/output module 506 and a memory 504. In some examples, the memory of the controller may store computer program instructions.

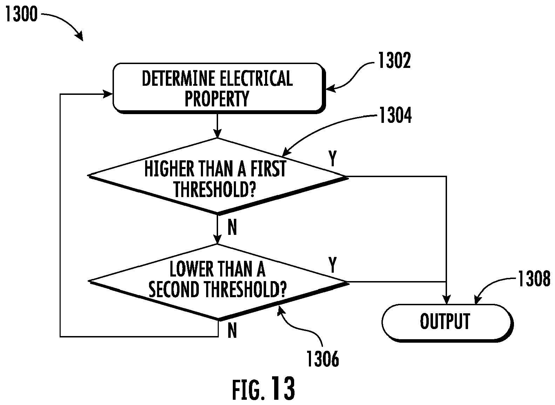

Referring now to FIG. 13, a flowchart diagram illustrating a method 1300 in accordance with various embodiments of the present disclosure is provided. In various embodiments, at step 1302, a controller (such as, but not limited to the controller 212 of any of the senor systems described herein) may determine an electrical property of an electrical component of the sensor. In various embodiments, the electrical property may be any of a resistance, capacitance, inductance, and/or generated voltage as described herein.

In various embodiments, at step 1304, the controller compares the electrical property with a first threshold. When the electrical property is greater than the first threshold, in various embodiments, the controller generates an output in step 1308. The output may be an alarm signal, warning signal, and/or any other signal generated for display of a warning generated on a display or for further examination. In various embodiments, the output may be sent to any of the BMS or VCU.

When the electrical property is not higher than the first threshold, in various embodiments, the controller compares the electrical property with a second threshold. When the electrical property is lower than the second threshold, in various embodiments, the controller generates the output in step 1308. When the electrical property is higher than the second threshold, in various embodiments, the controller continues to determine the electrical property at step 1302. In various embodiments, the second threshold is lower than the first threshold. In various embodiments, the determination of the electrical property occurs in real-time or continuously. In various embodiments, the determination of the electrical property occurs in various time intervals.

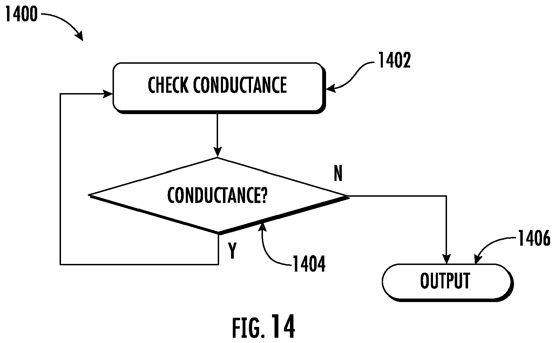

Referring now to FIG. 14, a flowchart diagram illustrating a method 1400 in accordance with various embodiments of the present disclosure is provided. In various embodiments, at step 1402, a controller (such as, but not limited to the controller 212 of any of the senor systems described herein) may determine conductance of an electrical component of the sensor. In various embodiments, the conductance of the breakable conductive element of the sensor may be determined.

In various embodiments, at step 1404, the controller determines whether the electrical component of the sensor has conductance or does not have conductance. When the electrical component does not have conductance, in various embodiments, the controller generates an output in step 1406. The output may be an alarm signal, warning signal, and/or any other signal generated for display of a warning generated on a display or for further examination. In various embodiments, the output may be sent to any of the BMS or VCU.

When the electrical property has conductance, in various embodiments, the controller continues to determine conductance at step 1402. In various embodiments, the determination of conductance occurs in real-time or continuously. In various embodiments, the determination of the electrical property occurs in various time intervals.

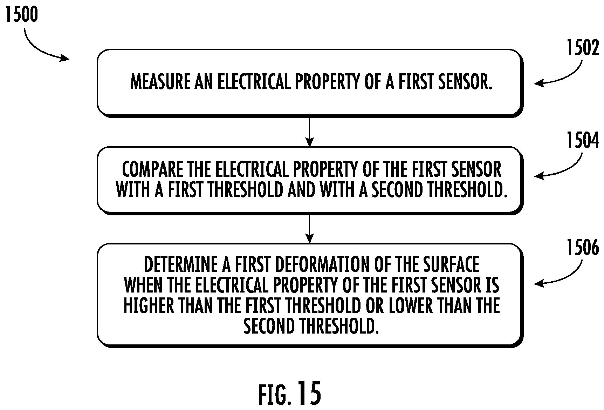

Referring now to FIG. 15 a flowchart illustrating a method 1500 is provided in accordance with various embodiments of the present disclosure. In various embodiments, at step 1502, the method 1500 measures an electrical property of a first sensor, for example sensor 210 with reference to FIGS. 2A-12. In various embodiments, the first sensor is mechanically coupled to a first point and a second point on a surface. In various embodiments, the first point and the second point are located across an opening of a groove on the surface.

In various embodiments, at step 1504, the method 1500 compares the electrical property of the first sensor with a first threshold and with a second threshold. In various embodiments, at step 1506, the method 1500 determines a first deformation of the surface when the electrical property of the first sensor is higher than the first threshold or lower than the second threshold. For example, any of the sensors described above, using any of the resistive, capacitive, and/or inductive strain gauge and/or piezoelectric element and/or breakable conductive element may be used for the variable electrical property.

In various embodiments, a detection module as described above for example with reference to FIG. 10 determines the variation and/or the amount of variation of the electrical property. In various embodiments, the controller as described above performs various aspects of the method for example determines the deformation.

In various embodiments, the surface is on a bottom cover of an electric vehicle facing a battery of the electric vehicle. In various embodiments, a deformation on any other surface may be determined using the devices, systems, and/or methods described herein. In various embodiments, the battery comprises a battery cell structure, wherein the battery cell structure and the bottom cover form a chassis of the electric vehicle.

In various embodiments, the method 1500 may further includes generating an alarm and/or a visual indication when the deformation is detected. In various embodiments, any of BMS, VCU, and/or the controller as described above may generate the alarm and/or the visual indication.

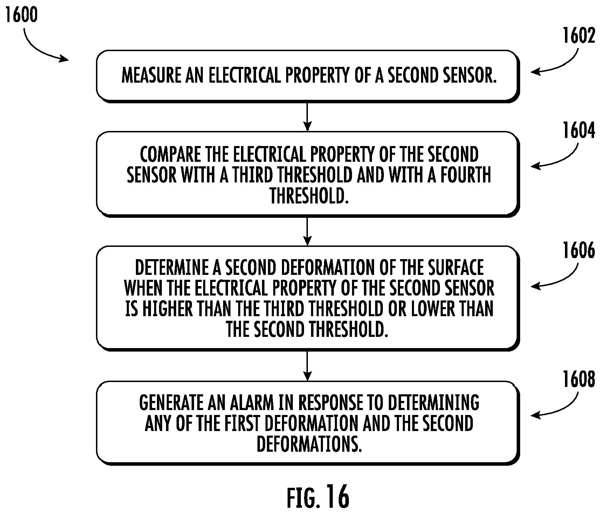

Referring now to FIG. 16 a flowchart illustrating a method 1600 is provided in accordance with various embodiments of the present disclosure. In various embodiments, at step 1602, the method 1600 measuring an electrical property of a second sensor, for example sensor 310 with reference to FIGS. 2A-12. In various embodiments, the second sensor is mechanically coupled to a third point and a fourth point on the surface. In various embodiments, the third point and the fourth point are located across the opening of the groove on the surface.

In various embodiments, at step 1604, the method 1600 compares the electrical property of the second sensor with a third threshold and with a fourth threshold. In various embodiments, at step 1606, the method 1600 determines a second deformation of the surface when the electrical property of the second sensor is higher than the third threshold or lower than the second threshold. In various embodiments, at step 1608, the method 1600 generates an alarm and/or a visual indicator in response to determining any of the first deformation and the second deformations. In various embodiments, any of BMS, VCU, and/or the controller as described above may generate the alarm and/or the visual indicator.

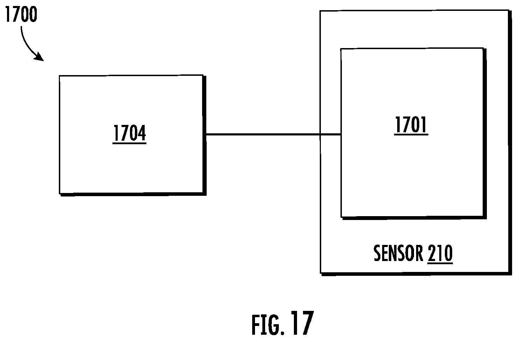

Referring now to FIG. 17 a schematic diagram illustrating a sensing device 1700 is provided in accordance with various embodiments of the present disclosure. In various embodiments, the sensing device 1700 includes a first sensor 210. The first sensor 210 may be configured to mechanically couple to a first point and a second point on a surface, for example a surface of a bottom cover of an electric vehicle. In various embodiments, the first point and the second point are located across an opening of a groove on the surface. In various embodiments, an electrical property of the first sensor is configured to change in response to a variation in the distance between the first point and the second point. In various embodiments, an electrical property of an electrical component 1701 of the first sensor is configured to change in response to a variation in the distance between the first point and the second point. In various embodiments, the electrical component may be any of the strain gauges and/or piezo electric and/or breakable conductive materials described herein.

In various embodiments, the sensing device 1700 includes a detection circuitry 1704. In various embodiments, the detection circuitry 1704 is configured to detect the change in the electrical property of the first sensor, and/or generate an output indicating a presence of a first deformation using the detection of the change in the electrical property of the first sensor. In various embodiments, the detection circuitry 1704 may be similar to the detection circuitry 804 as described with reference to FIG. 10 and configured to communicate with a BMS and/or VCU module(s).

In various embodiments, the sensing device 1700 includes a second sensor. In various embodiments, the second sensor is configured to mechanically couple to a third point and a fourth point on the surface. In various embodiments, the third point and the fourth point are located across the opening of a groove on the surface. In various embodiments, the third and fourth points may be places across an opening of the same or a different groove as the first and second points. In various embodiments, an electrical property of the second sensor is configured to change in response to a variation in the distance between the third point and the fourth point. In various embodiments, an electrical property of an electrical component of the second sensor is configured to change in response to a variation in the distance between the third point and the fourth point. In various embodiments, the detection circuitry is configured to detect the change in the electrical property of the second sensor, and/or generate an output indicating a presence of a second deformation using the detection of the change in the electrical property of the second sensor. In various embodiments, the detection circuitry is configured to electronically communicate with a communications circuitry, a controller, a BMS, and/or a VCU configured to generate an alarm using any of the output indicating the presence of the first deformation and the output indicating the presence of the second deformations.

In some examples, one or more of the procedures and/or methods described herein may be embodied by computer program instructions, which may be stored by a memory (such as a non-transitory memory) of a system employing an embodiment of the present disclosure and executed by a processing circuitry (such as a processor) of the system. These computer program instructions may direct the system to function in a particular manner, such that the instructions stored in the memory circuitry produce an article of manufacture, the execution of which implements the function specified in the flow diagram step/operation(s). Further, the system may comprise one or more other circuitries. Various circuitries of the system may be electronically coupled between and/or among each other to transmit and/or receive energy, data and/or information.

In some examples, embodiments may take the form of a computer program product on a non-transitory computer-readable storage medium storing computer-readable program instruction (e.g., computer software). Any suitable computer-readable storage medium may be utilized, including non-transitory hard disks, CD-ROMs, flash memory, optical storage devices, or magnetic storage devices.

Many modifications and other embodiments of the present disclosure set forth herein will come to mind to one skilled in the art to which these embodiments pertain having the benefit of the teachings presented in the foregoing descriptions and the associated drawings. Therefore, it is to be understood that the disclosures are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A sensing system comprising:
a groove formed on a surface, the groove comprising an opening, wherein a distance between a first point and a second point on the surface and across the opening is configured to vary in response to a first deformation on the surface;
a first sensor mechanically coupled to the first point and the second point, wherein an electrical property of the first sensor is configured to change in response to the variation in the distance between the first point and the second point; and
a detection circuitry configured to:
detect the change in the electrical property of the first sensor; and
generate an output indicating a presence of the first deformation using the detection of the change in the electrical property of the first sensor.

2. The sensing system of claim 1, comprising:
a second sensor coupled to a third point and a fourth point on the surface and across the opening, wherein a distance between the third point and the fourth point is configured to vary in response to a second deformation, and an electrical property of the second sensor is configured to change in response to the variation in the distance between the third point and the fourth point, wherein the detection circuitry is configured to:
detect the change in the electrical property of the second sensor; and
generate an output indicating a presence of the second deformation using the detection of the change in the electrical property of the second sensor; and
a communications circuitry configured to generate an alarm using any of the output indicating the presence of the first deformation and the output indicating the presence of the second deformations.

3. The sensing system of claim 2, wherein a line connecting the first point and the second point is distinct from and is approximately parallel to a line connecting the third point and the fourth point.

4. The sensing system of claim 2, wherein a line connecting the first point and the second point is distinct from and intersects a line connecting the third point and the fourth point.

5. The sensing system of claim 1, wherein the surface is on a bottom cover of an electric vehicle facing a battery of the electric vehicle.

6. The sensing system of claim 5, wherein the battery comprises a battery cell structure, wherein the battery cell structure and the bottom cover form a chassis of the electric vehicle.

7. The sensing system of claim 1, wherein the sensor comprises a resistive strain gauge wherein a resistance of the resistive strain gauge varies due to the variation in the distance between the first point and the second point and wherein the first deformation is detected when the resistance is outside a normal resistance range.

8. The sensing system of claim 1, wherein the sensor comprises a capacitive strain gauge wherein a capacitance of the capacitive strain gauge varies due to the variation in the distance between the first point and the second point and wherein the first deformation is detected when the capacitance is outside a normal capacitance range.

9. The sensing system of claim 1, wherein the sensor comprises an inductive strain gauge wherein an inductance of the inductive strain gauge varies due to the variation in the distance between the first point and the second point and wherein the first deformation is detected when the inductance is outside a normal inductance range.

10. The sensing system of claim 1, wherein the sensor comprises a piezoelectric material, wherein the piezoelectric material generates a voltage due to the variation in the distance between the first point and the second point and wherein the first deformation is detected when the voltage is outside a normal voltage range.

11. The sensing system of claim 1, wherein the sensor comprises a breakable conductive element, wherein the breakable conductive element generates an open circuit between the first point and the second point due to the variation in the distance between the first point and the second point and wherein the first deformation is detected using the open circuit.

12. The sensing system of claim 11, wherein the sensor comprises a flexible substrate, wherein a length of the flexible substrate is configured to change because of the variation in the distance between the first point and the second point, wherein the breakable conductive element is mechanically coupled to the flexible substrate.

13. The sensing system of claim 11, wherein the breakable conductive element comprises nanocrystal metal.

14. A method comprising:
measuring an electrical property of a first sensor, wherein the first sensor is mechanically coupled to a first point and a second point on a surface, wherein the first point and the second point are located across an opening of a groove on the surface;
comparing the electrical property of the first sensor with a first threshold and with a second threshold; and
determining a first deformation of the surface when the electrical property of the first sensor is higher than the first threshold or lower than the second threshold.
